# EUROPEAN PATENT SPECIFICATION

(11) **EP 0 791 494 B1**
(45) Date of publication and mention of the grant of the patent: **13.11.2002**
(21) Application number: 97300848.5
(22) Date of filing: 10.02.1997
(51) Int. Cl.: B60J 5/00, B60J 5/02, B60R 16/02

(54) **A vehicle door assembly**
Kraftfahrzeugtür
Porte pour véhicule automobile

(30) Priority: 23.02.1996 GB 9603836
(43) Date of publication of application: 27.08.1997
(73) Proprietor: Bayerische Motoren Werke Aktiengesellschaft, 80809 München (DE)
(72) Inventor: Vowles, Christopher James, Rivermead, Coventry CV5 8NL (GB)
(74) Representative: Bullwein, Fritz

(56) References cited:
- EP-A- 0 534 659
- DE-A- 3 842 340
- GB-A- 2 275 373
- PATENT ABSTRACTS OF JAPAN vol. 095, no. 009, 31 October 1995 & JP 07 156725 A (YAZAKI CORP), 20 June 1995,

## Description

The present invention relates to a vehicle door assembly.

It is known from DE-A-3842340 to provide a vehicle door assembly including a water shedder to which conductive strips are bonded to form the electrical circuit for powering and controlling the various components in the door. However, the electrical connections between the conductive strips and the electrical components are made by metal screws piercing the shedder. This makes the assembly process time consuming, and can affect the waterproof character of the shedder.

GB-A-2 275 373 discloses a flat harness assembly, which comprises plural circuits, which are separated into common circuits that are always used and optional circuits that are used only as required. The common circuits and optional circuits are separately stamped from copper foil, both sides of the circuits are coated with an insulating film, and the circuits are cut apart to complete the harnesses. This known flat harness assembly shall significantly reduce copper foil waste from circuit formation and shall reduce the size of the die needed for copper foil stamping.

It is an object of the present invention to create a vehicle door assembly of the type disclosed in DE-A-3 842 340 which can be produced and mounted at reduced costs with regard to the known vehicle door assembly.

This object is solved by the vehicle door assembly according to claim 1. Advantageous embodiments are disclosed in the dependent claims.

The water proof sheet may be made of polyester, or any other suitable water proof material.

Preferably, the support means is between the covering layer and the water proof sheet and said free portion protrudes beyond an edge of the cover layer. This means that the portion of the support means to be adhered to the water proof sheet can be that part of it, which is covered by the cover layer.

Preferably, the shedder comprises two of said electrical connectors for connecting the conducting means to respective electrical components, the electrical connectors being on opposite sides to the shedder. This can conveniently be achieved by the water proof sheet having an opening therein through which a connection between one of said connectors and a part of said conducting means extends. This connection may simply comprise another part of the conducting means and may be supported on the free portion of the support means. This means that electrical connections can be made on both sides of the water proof sheet.

Preferred embodiments of the present invention will now be described by way of example only with reference to the accompanying drawings in which:
Figure 1 is an exploded view of a known door assembly,
Figure 2 shows the conventional wiring in the system of Figure 1,
Figure 3 shows a door structure of a door assembly according to the invention,
Figures 4, 5 and 6 show parts of a water shedder for use with the door of Figure 3.

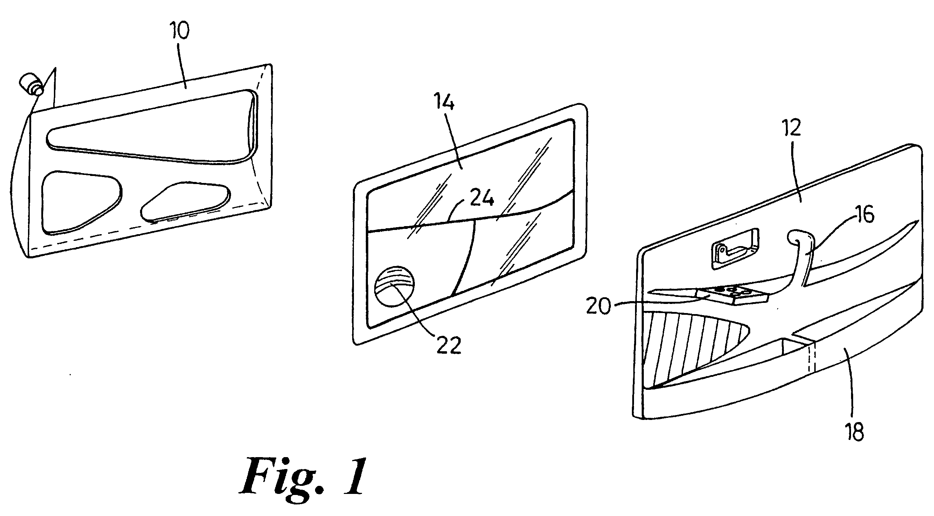

Referring to Figure 1, the general construction of a door assembly of the type to which this invention relates comprises a door structure 10 formed from pressed steel sheets which are welded together, an inner casing 12 which covers the interior of the door assembly, and a water shedder 14 between the door structure and the inner casing 12. The inner casing 12 is formed of moulded plastics material and includes a door handle 16, a map pocket 18, and controls 20 for the electrically powered windows. The water shedder 14 comprises a flexible polyester sheet. It prevents the water which runs down inside the door structure 10 from coming into contact with the inner casing 12. It also includes a built-in speaker shedder 22 which covers a speaker built into the door. An adhesive bead 24 applied to the shedder or door structure 10 enables the shedder to be attached to the door structure 10.

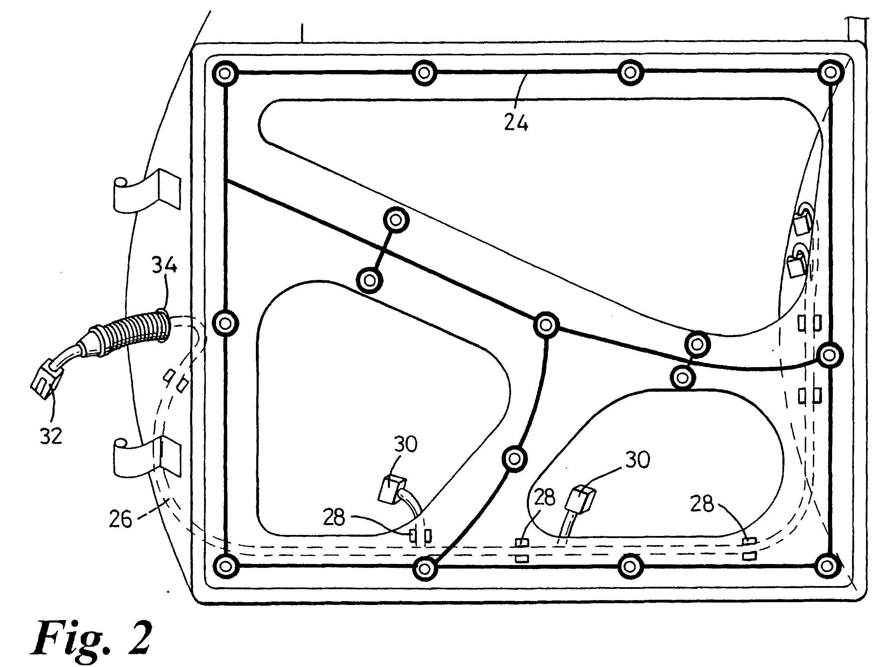

Referring to Figure 2, the conventional wiring harness 26 for supplying power to the various electrical components in the door assembly is simply clipped into the door assembly by a series of clips 28. The connectors 30 for connecting the harness to the components in the door hang free inside the door assembly until they are connected up. The main connector 32 for connection to the rest of the vehicle electrical harness is attached to an end of the door harness 26 which extends through a hole 34 in the end of the door structure 12.

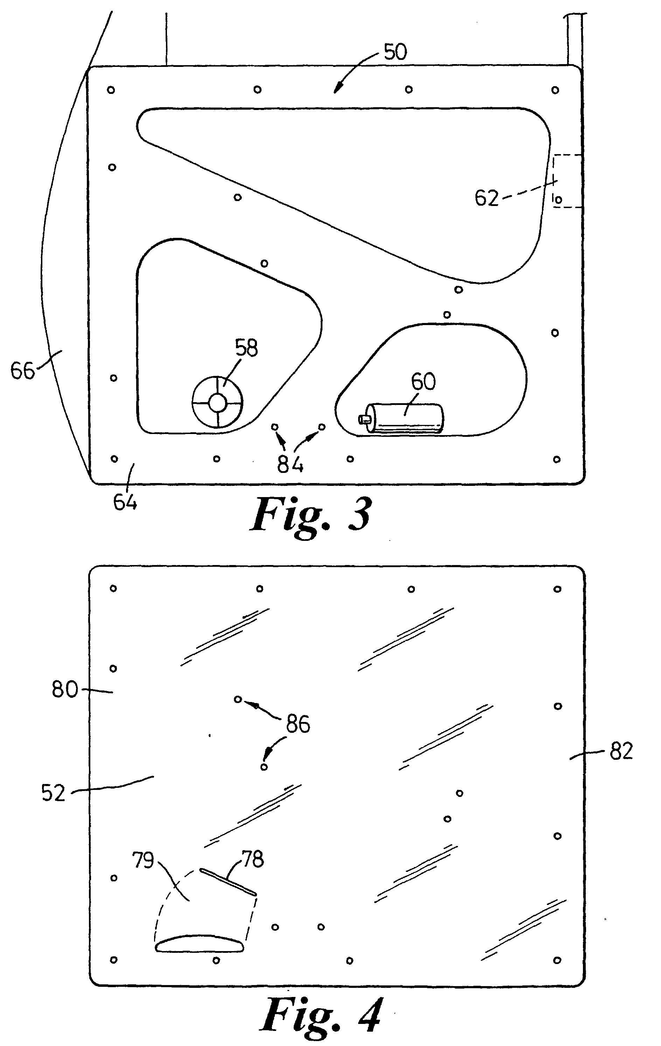

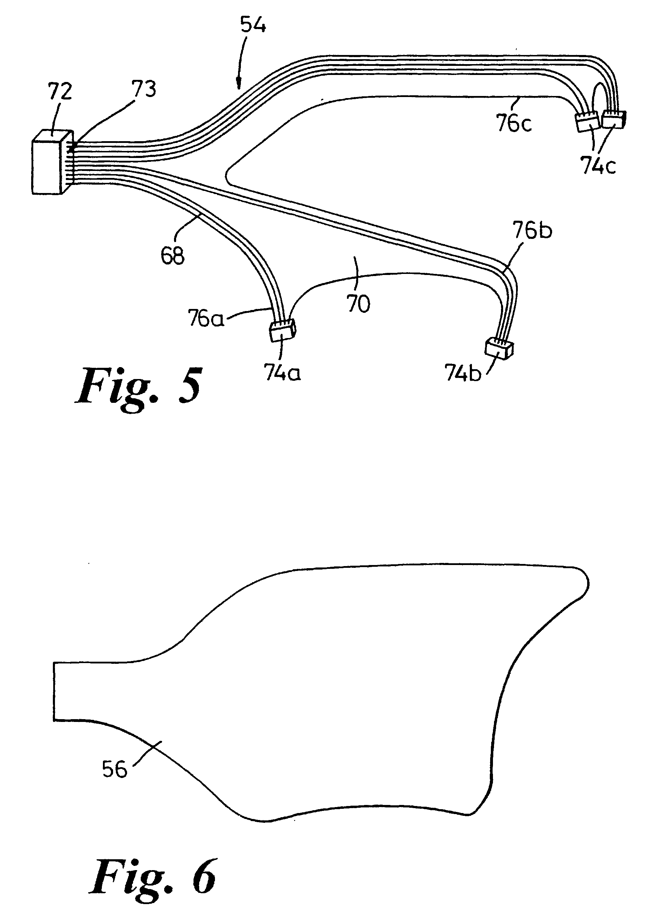

In the door assembly according to the invention shown in Figures 3 to 6, the door structure 50 and the inner casing (not shown) correspond to those shown in Figure 1. The water shedder 14 and wiring harness 26 are replaced by an integrated shedder and harness formed from a water proof polyester main sheet 52, a flexible printed circuit 54 and a cover sheet 56.

The flexible printed circuit 54 comprises a flexible polyester support sheet 70 to which tracks 68 of copper are applied. The support sheet 70 is branched, and has a main connector 72 at its 'base' 73 where all the tracks 68 converge, and further connectors 74a, 74b, 74c at the end of each branch 76 where the copper tracks 68 are to be connected to the electrical components 58, 60, 62 in the door. The method for applying the copper to the support sheet is known in the art, and is described, for example, in GB-A-2 220 107. The cover sheet 56 is also made of polyester and is shaped so as to cover substantially all of the copper tracks 68. The main sheet 52 is also made of polyester and is the same shape and size as the inner panel 64 of the door structure 50 and covers it almost entirely.

The door structure 50 has a speaker 58, a window winder 60 and an electric lock 62 mounted in it, between its inner and outer panels 64, 66.

The shedder is produced as follows. Firstly, a laminate having a layer of polyester and a layer of copper is produced. This is then printed with etch resistant ink in the shape of the required copper tracks 68. The bare copper is then etched off leaving the copper tracks 68. The connectors 72, 74a, 74b, 74c are then attached to the support sheet. The cover sheet 56 is then bonded to the support sheet 70 so as to cover the copper tracks 68. Finally the support sheet 70 and cover sheet 56 are bonded to the main sheet 52. The bonding of the sheets can be thermal bonding or may alternatively use an adhesive.

The thickness of the polyester sheets 52, 56, 70 is not critical and only needs to be sufficient to give the shedder sufficient strength whilst allowing it to be flexible enough for easy assembly. Thicknesses of about 0.1 mm would be sufficient in many cases.

Whilst the main portion of the support sheet 70, comprising its base 73 and most of the length of each of the branches 76, is bonded to the main sheet 52, the ends of the branches 76 of the support sheet 70 are left as free portions not attached by bonding to the main sheet 52. The connectors 74 can therefore be moved away from the main sheet 52, together with the ends of the branches 76 on which they are supported, for ease of connection to the electrical components 58, 60, 62. One of the connectors 74a, together with the free portion at the end of one of the branches 76a of the support sheet and the end of the conductive track 68, is passed through a slit 78 in the sheet 70 for connection to the speaker 58. The branch 76a and the main sheet 52 are bonded together along each side of the slit 78 so that water cannot pass through the slit 78.

Prior to assembly to the door structure 50, the water shedder 52, 54, 56 is rolled up. An adhesive bead is then applied to the door structure 50. The front end 80 of the shedder is then attached to the door structure, and the shedder unrolled until the speaker 58 can be connected to its connector 74a. A built-in speaker shedder 79 is also guided over the speaker at this point.

The shedder is then unrolled further and another section of it attached to the door structure, and the window winder 60 connected to its connector 74b. The shedder is then completely unrolled, and all but the rear edge 82 attached to the door structure 50. Finally the lock 62 is connected up to its connector 74c and the rear edge 82 of the shedder stuck down.

The door casing (not shown) is then attached to the door using clips which pass through aligned sets of holes 84, 86 in the shedder and door structure.

It will be appreciated that the exact structure of the shedder could be altered in several ways. The protective layer could be omitted, provided some form of protective layer were provided over the copper tracks 68, or it could be replaced by a spray-on insulating layer. The shedder could even be formed from a single sheet of flexible water proof material, with the copper tracks applied to it, and slits in it to create flaps with the connectors on them.

## Claims

1. A vehicle door assembly comprising a door structure including an outer panel (66) and having an electrical component (58, 60) mounted therein, an interior covering means (12) on the interior side of the assembly, and a water shedder (14) between the outer panel and the covering means, the water shedder (14) comprising flexible electrical conducting means (68) for supplying electrical power to the electrical component, whereby the water shedder (14) further comprises a waterproof sheet (52), whereby an electrical connector (74a, 74b, 74c) is attached to the waterproof of sheet (52) for connection to the electrical component, **characterised in that** the water shedder (14) comprises a flexible supporting means which has said flexible electrical conducting means attached to a surface thereof, the supporting means being attached to the waterproof sheet and having a free portion which is movable away from the waterproof sheet, whereby the supporting means (70) is a flexible sheet comprising a main portion, which is attached to the water proof sheet (52), and the free portion (76a, 76b, 76c), and
the water shedder (14) further comprises a covering layer (56) which is adjacent to the supporting means (70) and covers the electrical conducting means (68).

2. A door assembly according to claim 1, **characterised in that** the supporting means (70) is between the covering layer (56) and the water proof sheet (52) and the free portion (76a, 76b, 76c) protrudes beyond an edge of the cover layer.

3. A door assembly according to claim 1 or 2, **characterised in that** the electrical conducting means (68) comprises tracks of electrically conductive material applied to a surface of the supporting means (70).

4. A door assembly according to any foregoing claim, **characterised in that** the shedder comprises two electrical connectors (74a, 74b, 74c) for connecting the conducting means (68) to respective electrical components (58, 60), the electrical connectors being on opposite sides of the shedder.

5. A door assembly according to claim 4, **characterised in that** the water proof sheet (52) has an opening (78) therein through which a connection between one of the connectors and a part of the conducting means extends.

6. A door assembly according to claim 5, **characterised in that** the connection comprises a part of the electrical conducting means (68) attached to the free portion.

7. A door assembly according to claim 6, **characterised in that** the free portion extends through the opening.

## Patentansprüche

1. Fahrzeugtüranordnung, die eine Türkonstruktion mit einer Außenverkleidung (66) und einem darin angebrachten elektrischen Bauteil (58, 60), ein inneres Deckmittel (12) auf der Innenseite der Anordnung und eine Wasserabweisvorrichtung (14) zwischen der Äußenverkleidung und dem Deckmittel umfasst, wobei die Wasserabweisvorrichtung (14) ein flexibles elektrisches Leitungsmittel (68) zur Versorgung des elektrischen Bauteils mit Strom umfasst, wobei die Wasserabweisvorrichtung (14) weiterhin eine wasserabweisende Folie (52) umfasst und ein elektrischer Verbinder (74a, 74b, 74c) zur Verbindung mit dem elektrischen Bauteil an der wasserabweisenden Folie (52) befestigt ist, **dadurch gekennzeichnet, dass** die Wasserabweisvorrichtung (14) ein flexibles Trägermittel umfasst und das flexible elektrische Leitungsmittel an einer Fläche davon befestigt ist, wobei das Trägermittel an der wasserabweisenden Folie befestigt ist und einen freien Teil aufweist, der von der wasserabweisenden Folie weg bewegt werden kann, wobei das Trägermittel (70) eine flexible Folie ist, die einen an der wasserabweisenden Folie (52) befestigten Hauptteil und den freien Teil (76a, 76b, 76c) umfasst, und die Wasserabweisvorrichtung (14) weiterhin eine Decklage (56) umfasst, die sich neben dem Trägermittel (70) befindet und das elektrische Leitungsmittel (68) bedeckt.

2. Türanordnung nach Anspruch 1, **dadurch gekennzeichnet, dass** sich das Trägermittel (70) zwischen der Decklage (56) und der wasserabweisenden Folie (52) befindet und der freie Teil (76a, 76b, 76c) über einen Rand der Decklage hinausragt.

3. Türanordnung nach Anspruch 1 oder 2, **dadurch gekennzeichnet, dass** das elektrische Leitungsmittel (68) auf einer Fläche des Trägermittels (70) aufgebrachte Leiterbahnen aus elektrisch leitendem Material umfasst.

4. Türanordnung nach einem der vorhergehenden Ansprüche, **dadurch gekennzeichnet, dass** die Abweisvorrichtung zwei elektrische Verbinder (74a, 74b, 74c) zur Verbindung des Leitungsmittels (68) mit jeweiligen elektrischen Bauteilen (58, 60) umfasst, wobei sich die elektrischen Verbinder auf gegenüberliegenden Seiten der Abweisvorrichtung befinden.

5. Türanordnung nach Anspruch 4, **dadurch gekennzeichnet, dass** die wasserabweisende Folie (52) eine Öffnung (78) aufweist, durch die sich eine Verbindung zwischen einem der Verbinder und einem Teil des Leitungsmittels erstreckt.

6. Türanordnung nach Anspruch 5, **dadurch gekennzeichnet, dass** die Verbindung einen am freien Teil befestigten Teil des elektrischen Leitungsmittels (68) umfasst.

7. Türanordnung nach Anspruch 6, **dadurch gekennzeichnet, dass** sich der freie Teil durch die Öffnung erstreckt.

## Revendications

1. Ensemble de porte pour véhicule automobile, comprenant une structure de porte munie d'un panneau extérieur (66) et comportant un composant électrique (58, 60) monté dans celle-ci, un moyen de garniture intérieur (12) placé du côté intérieur de l'ensemble, et un écran de protection contre l'eau (14) placé entre le panneau extérieur et le moyen de garniture intérieur, l'écran de protection contre l'eau (14) comprenant un moyen de conducteur électrique flexible (68) pour fournir la puissance électrique d'alimentation au composant électrique, l'écran de protection contre l'eau (14) comprenant en outre une feuille étanche à l'eau (52), de façon qu'un connecteur électrique (74a, 74b, 74c) soit fixé à la feuille étanche à l'eau (52) pour le branchement du composant électrique,
**caractérisé en ce que**
l'écran de protection contre l'eau (14) comprend un moyen de support flexible sur une surface duquel est fixé le moyen de conducteur électrique flexible, le moyen de support étant fixé à la feuille étanche à l'eau et comportant une partie libre qui peut s'écarter de la feuille étanche à l'eau, de sorte que le moyen de support (70) est une feuille flexible comprenant une partie principale fixée à la feuille étanche à l'eau (52) et la partie libre (76a, 76b, 76c) ; et
l'écran de protection contre l'eau (14) comprend en outre une couche de recouvrement (56) qui est adjacente au moyen de support (70) et recouvre le moyen de conducteur électrique (68).

2. Ensemble de porte selon la revendication 1,
**caractérisé en ce que**
le moyen de support (70) est placé entre la couche de recouvrement (56) et la feuille étanche à l'eau (52), tandis que la partie libre (76a, 76b, 76c) fait saillie au-delà d'un bord de la couche de recouvrement.

3. Ensemble de porte selon la revendication 1 ou 2,
**caractérisé en ce que**
le moyen de conducteur électrique (68) comprend des pistes de matériau électriquement conducteur, qui sont appliquées sur une surface du moyen de support (70).

4. Ensemble de porte selon l'une quelconque des revendications précédentes,
**caractérisé en ce que**
l'écran de protection comprend deux connecteurs électriques (74a, 74b, 74c) pour connecter le moyen de conducteur (68) aux composants électriques respectifs (58, 60), les connecteurs électriques étant situés sur les côtés opposés de l'écran de protection.

5. Ensemble de porte selon la revendication 4,
**caractérisé en ce que**
la feuille étanche à l'eau (52) est percée d'une ouverture (78) à travers laquelle passe une connexion entre l'un des connecteurs et une partie du moyen de conducteur.

6. Ensemble de porte selon la revendication 5,
**caractérisé en ce que**
la connexion comprend une partie du moyen de conducteur électrique (68) qui est fixée à la partie libre.

7. Ensemble de porte selon la revendication 6,
**caractérisé en ce que**
la partie libre passe à travers l'ouverture.
